# EUROPEAN PATENT APPLICATION

(11) **EP 2 679 404 A1**
(43) Date of publication of application: **01.01.2014**
(21) Application number: 12173558.3
(22) Date of filing: 26.06.2012
(51) Int. Cl.: B60B 1/04, B60B 5/02, B60B 27/02

(54) **Bicycle hub-spoke assembly**

(71) Applicant: Gigantex Composite Technologies Co., Ltd., Beidou Township 52147 (TW)
(72) Inventor: Sho-Chang, Lee, 52147 Beidou Township (TW)
(74) Representative: Viering, Jentschura & Partner

(57) **Abstract**

A bicycle hub-spoke assembly includes a hub (10) that has one end provided with at least one connecting portion (13), and at least one spoke set (20) that has a fastening ring (21) mounted around the connecting portion (13) and plural spokes (22) radially extending outward from the fastening ring (21). Thereby, the spokes (22) can be rapidly fixed to the hub (10) through the fastening ring (21) instead of being installed onto the hub (10) one by one.

## Description

### Background of the Invention

### 1. Field of the Invention

The present invention relates to a bicycle hub-spoke assembly according to the preamble of Claim 1. Accordingly, the present invention severally relates to bicycle hub-spoke assemblies and more particularly, to a bicycle hub-spoke assembly that allows quick combination between spokes and a hub thereof, and can be assembled to a bicycle wheel rim conveniently and adjustably.

### 2. Description of the Related Art

Traditionally, a bicycle hub is peripherally formed with a raw of fixing holes to independently receive plural separated spokes, as can be seen in Taiwan Patent No. M332034 and Taiwan Patent No. 348024. The spoke typically has a radially-enlarged fixing end for being retained at the fixing hole and a threaded end for being combined with a wheel rim.

To assemble the traditional bicycle hub-spoke assembly, the spokes have to be installed one by one, and then be adjusted at their threaded ends respectively to provide uniform tension that properly hold the hub at the center of the wheel rim. The whole assembling and adjusting process is therefore time-consuming, leading to poor efficiency of production and fabrication.

### SUMMARY OF THE INVENTION

One objective of the present invention is to provide a bicycle hub-spoke assembly having an integrated spoke set that allows fast combination between spokes and its hub so that the problem of the prior art that separated spokes have to be installed one by one can be eliminated, thereby simplifying the assembling and adjusting process and improving the efficiency of production and fabrication.

Another objective of the present invention is to provide a bicycle hub-spoke assembly wherein a fastening ring and spokes are formed into an integrated spoke set as a unity. Since the position of the fastening ring with respect to the spokes is fixed, the spoke set can rapidly hold a hub at the center of a wheel rim, and then the combination between the spokes and the wheel rim can be adjusted by spoke caps to provide appropriate tension.

To achieve these and other objects of the present invention, the invention provides a bicycle hub-spoke assembly according to Claim 1. Further embodiments of the invention are described in the dependent claims.

### BRIEF DESCRIPTION OF THE DRAWINGS

**FIG. 1** is a perspective view of a bicycle hub-spoke assembly according to one embodiment of the present invention combined with a wheel rim.
**FIG. 2** is an exploded view of the bicycle hub-spoke assembly and the wheel rim.
**FIG. 3** is an exploded view of the bicycle hub-spoke assembly.
**FIG. 4** is a cross-sectional view of the bicycle hub-spoke assembly combined with the wheel rim.
**FIG. 5** is an enlarged view of the circled area of FIG. 4.

### DETAILED DESCRIPTION OF THE INVENTION

The following preferred embodiment is made to clearly exhibit the above-mentioned and other technical contents, features and effects of the present invention. The accompanying drawings are intended for reference and illustration, but not to limit the present invention and are not made to scale.

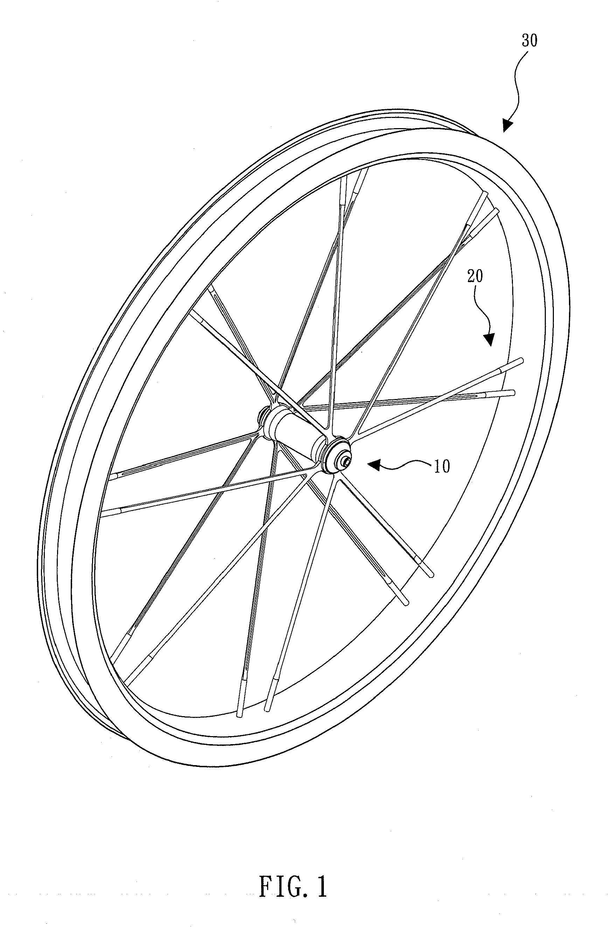

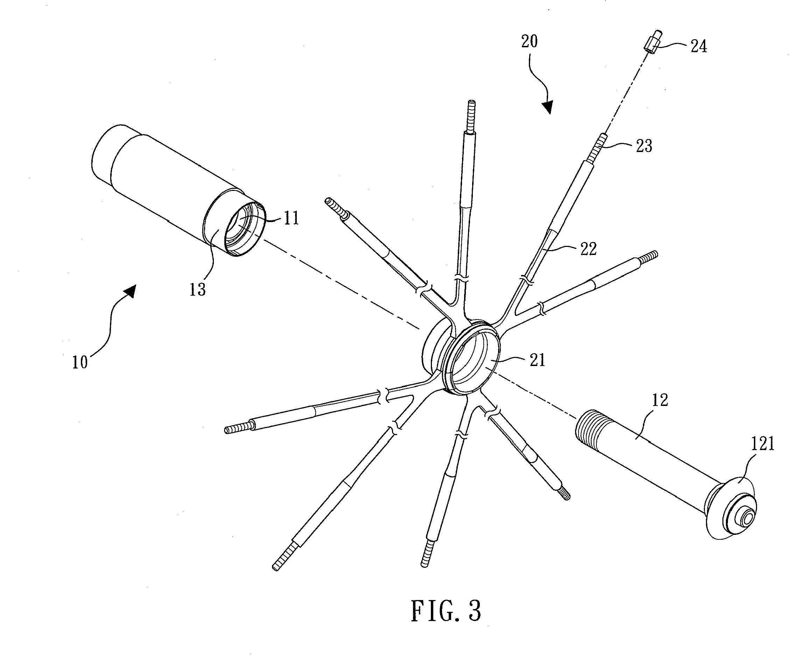

Referring to **FIG. 1** through **FIG. 3****,** according to one embodiment of the present invention, a bicycle hub-spoke assembly primarily comprises a hub **10** and two spoke sets **20.**

The hub **10** is centrally formed with an axial hole **11** for receiving a wheel shaft **12** passing therethrough. The hub **10** has two ends thereof each formed with a connecting portion **13.** The connecting portion **13** is a radially-reduced section. Meanwhile, the wheel shaft **12** has one end formed with a radially-enlarged flange **121,** and has an opposite end removably combined with a retaining member **122.**

The spoke set **20** includes a fastening ring **21** and plural spokes **22** radially extending outward from the fastening ring **21.** The fastening ring **21** is configured to be mounted around the connecting portion **13.** Each of the spokes **22** has a free end formed as a fixing end **23** for being combined with a wheel rim **30.**

With the understanding of the configuration of the disclosed bicycle hub-spoke assembly as described above, the operation thereof will be given in detail below.

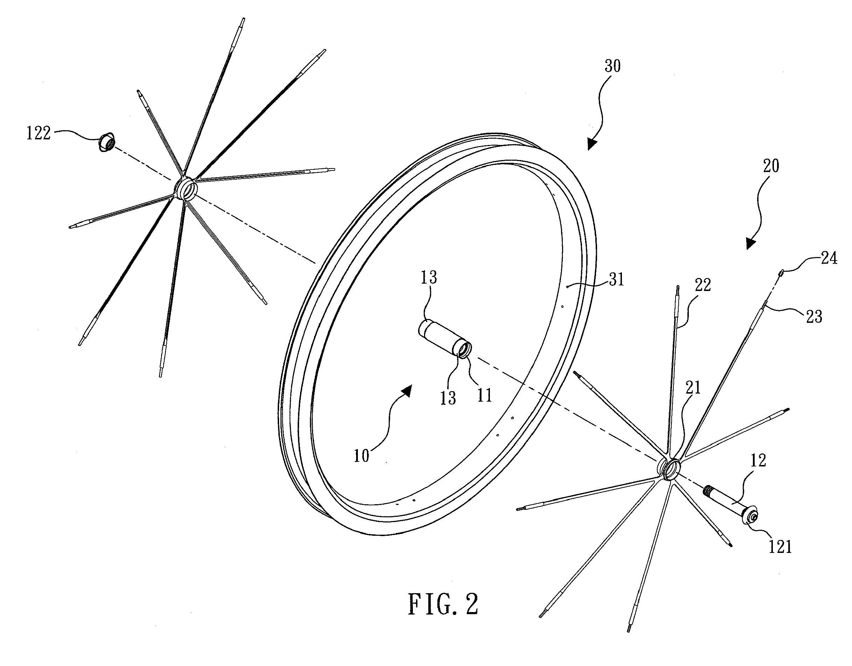

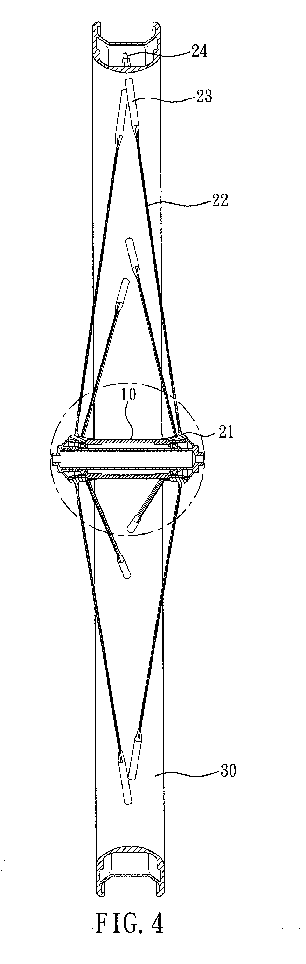

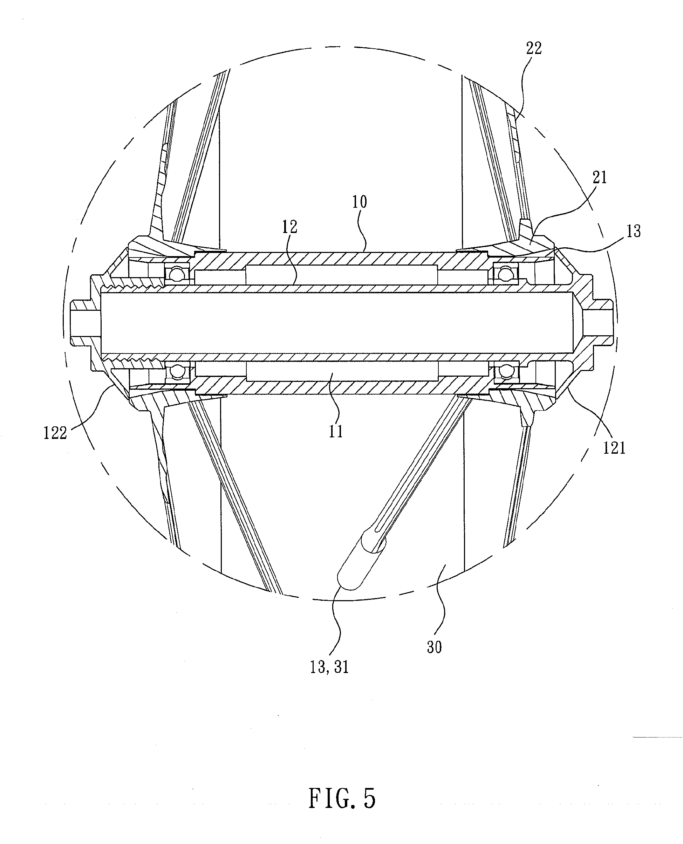

Referring to **FIG. 2** through **FIG. 5****,** in virtue of the fastening ring **21,** the spoke set **20** can be rapidly positioned at the connecting portion **13** of the hub **10,** so as to eliminate the problem of the prior art that separated spokes have to be installed one by one. Furthermore, the connecting portion **13** and the fastening ring **21** may be glued together. In one embodiment, the hub **10** and the spoke set **20** are both made from carbon fiber and glued together by an epoxy adhesive. In addition, the radially-enlarged flange **121** of the wheel shaft **12** can work with the retaining member **122** at the opposite end of the hub **10** to enhance the combination between the fastening ring **21** and the connecting portion **13.**

Moreover, the fixing end **23** is a threaded segment and the wheel rim **30** has plural through holes **31** formed along its inner periphery for each receiving one said fixing end **23.** The fixing end **23** is then screwed with a spoke cap **24,** so as to combine the corresponding spoke **22** with the wheel rim **30.** The spoke cap **24** serves to adjust the depth of the fixing end **23** entering the through hole **31,** thereby adjusting the tension of the spoke **22.**

As stated above, in virtue of the fastening ring **21,** the spoke set **20** can be rapidly positioned at the connecting portion **13** of the hub **10,** so as to eliminate the problem of the prior art that separated spokes have to be installed one by one, thereby simplifying the assembling and adjusting process and improving the efficiency of production and fabrication.

In the present invention, the fastening ring **21** and the spokes **22** may be formed as a unity. The position of the fastening ring **21** with respect to the spokes **22** is fixed, so the spoke set **20** can rapidly hold the hub **10** at the center of a wheel rim **30.** Then the depths of the fixing end **23** entering the through holes **31** can be adjusted to provide appropriate tension.

The present invention has been described with reference to the preferred embodiments and it is understood that the embodiments are not intended to limit the scope of the present invention. Moreover, as the contents disclosed herein should be readily understood and can be implemented by a person skilled in the art, all equivalent changes or modifications which do not depart from the concept of the present invention should be encompassed by the appended claims.

## Claims

1. A bicycle hub-spoke assembly for being combined with a wheel rim (30), the bicycle hub-spoke assembly being **characterized in** comprising:
a hub (10) having at least one end provided with a connecting portion (13); and
at least one spoke set (20), each having a fastening ring (21) for being mounted around the connecting portion (13) and also having a plurality of spokes (22) extending outward radially from the fastening ring (21).

2. The bicycle hub-spoke assembly of Claim 1, wherein the connecting portion (13) is a radially-reduced section.

3. The bicycle hub-spoke assembly of Claim 1, wherein the connecting portion (13) and the fastening ring (21) are glued together.

4. The bicycle hub-spoke assembly of Claim 1, wherein each of the spokes (22) has a free end formed as a fixing end (23).

5. The bicycle hub-spoke assembly of Claim 4, wherein the fixing end (23) is configured to be combined with the wheel rim (30).

6. The bicycle hub-spoke assembly of Claim 5, wherein the fixing end (23) is a threaded segment and combined with the wheel rim (30) via a spoke cap (24).

7. The bicycle hub-spoke assembly of Claim 1, wherein the fastening ring (21) and the spokes (22) are formed as a unity.
